# FASCICULE DE BREVET EUROPEEN

(11) **EP 1 693 264 B1**
(45) Date de publication et mention de la délivrance du brevet: **19.08.2009**
(21) Numéro de dépôt: 06002110.2
(22) Date de dépôt: 02.02.2006
(51) Int. Cl.: B60T 13/565, B60T 13/57

(54) **Servomoteur d'assistance pneumatique au freinage a course morte reduite et maître-cylindre de freinage pour un tel servomoteur**
Pneumatischer Bremskraftverstärker mit reduziertem Todweg und Hauptbremszylinder für einen solchen Verstärker
Pneumatic brake booster with reduced dead zone and master brake cylinder for such a booster

(30) Priorité: 18.02.2005 FR 0501811
(43) Date de publication de la demande: 23.08.2006
(73) Titulaire: ROBERT BOSCH GMBH, 70442 Stuttgart (DE)
(72) Inventeur: Anderson, Christ, 75002 Paris (FR); Michon, Jean-Pierre, 77178 Saint Pathus (FR); Attard, Jean-Marc, 60340 Villers Sous St Leu (FR); Sprocq, Raynald, 77450 Esbly (FR)
(74) Mandataire: Hurwic, Aleksander Wiktor

(56) Documents cités:
- FR-A- 2 696 143
- FR-A- 2 824 036
- FR-A- 2 856 363
- US-B1- 6 467 390

## Description

La présente invention se rapporte principalement à un servomoteur d'assistance pneumatique au freinage à course morte réduite et à un dispositif de freinage comportant un tel servomoteur

Il est connu de l'état de la technique un dispositif dé freinage d'actionnement rapide ou dit également à course morte réduite comportant un maître-cylindre actionné par une tige de commande actionnée par un conducteur, l'action du conducteur étant amplifiée par un servomoteur d'assistance pneumatique permettant de réduire la course de la pédale nécessaire à l'obtention d'une action de freinage.

Un servomoteur de type connu est décrit dans le document FR 2 696 143, il comporte une enveloppe dans laquelle est montée à coulissement étanche une jupe divisant l'espace intérieur de l'enveloppe en une chambre à basse pression et une chambre à pression variable.

La jupe comporte un passage central dans lequel est monté un piston pneumatique muni d'une valve à trois voies actionnée par la tige de commande mettant en communication la chambre à basse pression et la chambre de travail au repos, et isolant la chambre à basse pression de la chambre de travail et mettant la chambre de travail en communication avec une source de fluide à haute pression.

La jupe est montée mobile axialement par rapport au piston pneumatique sur une course déterminée en début de freinage. Par conséquent, lorsque le conducteur appuie sur la pédale de frein, la chambre de travail est isolée de la chambre à basse pression et se remplit de fluide pneumatique à haute pression. Du fait du différentiel de pressions entre la chambre à basse pression et la chambre de travail, la jupe se déplace dans la chambre à basse pression, sans emporter le piston pneumatique sur la course déterminée. Par conséquent le conducteur n'a pas à enfoncer d'avantage la pédale pour maintenir l'alimentation de la chambre de travail en fluide pneumatique à haute pression. Le déplacement de la jupe est transmis à un piston primaire d'un maître-cylindre, provoquant la fermeture des clapets du maître-cylindre et une montée en pression au niveau des freins.

Au delà de la course déterminée, la jupe vient en appui sur une partie radialement externe du piston pneumatique, leurs mouvements sont alors liés. A partir de cet instant, le conducteur doit enfoncer d'avantage la tige de commande pour obtenir une augmentation de l'intensité de freinage. Suivant le choix de la course morte, le conducteur « ne verra pas à la pédale de frein » la course nécessaire à la fermeture des clapets du maître-cylindre, cette course ne produisant pas de montée en pression dans les freins, appelée aussi course morte, ou le conducteur ressentira directement une forte décélération donnant la sensation d'un freinage appuyé.

Ce dispositif appelé dispositif de course morte masquée puisqu'elle masque les courses mortes au conducteur, donne entière satisfaction, mais fait toujours l'objet de recherches pour le simplifier afin d'en réduire la complexité, d'en améliorer la facilité de montage et également d'en réduire le coût de revient. En effet le dispositif est d'une structure très complexe puisqu'il nécessite de contourner le piston pneumatique et une réalisation par emboutissage en plusieurs passes.

Le document FR 0307572 décrit un servomoteur course morte masquée de conception simple et de grande sûreté dans lequel la jupe et le piston sont solidaires et le premier siège de clapet isolant la chambre basse pression de la chambre haute pression est porté par une première extrémité longitudinale d'une douille montée à coulissement étanche dans le piston pneumatique sur une première course déterminée, solidaire du piston pneumatique au delà de cette course déterminée. La douille devient solidaire en déplacement du piston pneumatique par l'intermédiaire d'une clé montée orthogonalement à l'axe du piston pneumatique et de la douille. La clé est solidaire du piston pneumatique ou de la douille, coulisse respectivement dans une lumière pratiquée dans la douille ou le piston pneumatique. Au delà d'une certaine course, la clé vient en appui contre une extrémité avant de la lumière et lie dans le sens d'actionnement le piston pneumatique et la douille formant alors un piston pneumatique classique.

Ce dispositif offre complète satisfaction, cependant il y a toujours une recherche d'amélioration et de simplification de la structure pour rendre celle-ci de montage plus simple et économiquement plus avantageux.

C'est par conséquent un but de la présente invention d'offrir un système de freinage d'une grande réactivité, de conception simple et d'un prix de revient faible.

Les buts précédemment énoncés sont atteints par un servomoteur à déplacement du piston pneumatique indépendant de celui de la tige de commande sur un course déterminée, comportant une douille apte à coulisser dans le corps du piston pneumatique, la solidarisation de la douille et du piston pneumatique s'effectuant par l'intermédiaire de surfaces d'appui portées respectivement par le piston pneumatique et la douille.

En d'autres termes, le piston pneumatique vient en contact direct avec la douille sans pièce intermédiaire, ceci a pour effet de simplifier à la fois la réalisation des pièces et l'assemblage de celles-ci.

La présente invention a également pour objet un servomoteur d'assistance pneumatique au freinage comportant une enveloppe d'axe longitudinale, dans laquelle est monté à coulissement étanche un ensemble jupe et piston pneumatique d'axe longitudinal, ledit ensemble, divisant l'espace intérieur de l'enveloppe en une chambre à basse pression et en une chambre à pression variable, une valve trois voies actionnée par une tige de commande étant montée dans un passage longitudinal percé dans le piston pneumatique, ladite tige de commande étant reliée par une première extrémité longitudinale à une pédale de frein et une deuxième extrémité de ladite tige de commande étant reçue dans une cavité de réception pratiquée dans une première extrémité longitudinale d'un distributeur-plongeur, un palpeur d'application de l'effort de la tige de commande à un piston hydraulique d'un maître-cylindre par l'intermédiaire d'un dispositif de réaction, ledit ensemble jupe et piston, transmettant un effort d'assistance pneumatique au piston hydraulique du maître-cylindre par une face centrale du piston pneumatique, ladite valve trois voies comportant un premier et un deuxième sièges de clapet, et un obturateur amené en application d'au moins un des premier et deuxième sièges de clapet, par un ressort de valve, ledit deuxième siège de clapet étant porté par une première extrémité longitudinale du distributeur-plongeur, le premier siège de clapet étant porté par une première extrémité longitudinale d'une douille montée à coulissement étanche dans le piston pneumatique sur une première course déterminée, un moyen de solidarisation apte à lier axialement la douille au piston pneumatique lorsque ledit piston pneumatique a parcouru la course déterminée, caractérisé en ce que ledit moyen comporte un premier appui porté par une surface intérieure de l'alésage du piston pneumatique et un deuxième appui porté par une surface extérieure de la douille et destiné à venir en contact lorsque ladite course déterminée a été parcourue, le premier appui étant disposé en arrière du deuxième appui selon l'axe dans le sens d'actionnement du servomoteur.

Un servomoteur selon la préambule de la revendication 1 est connu du document FR 2 824 036 A.

La présente invention a également pour objet un servomoteur caractérisé en ce que le premier et le deuxième appui sont formés par des première et deuxième surfaces annulaires.

La présente invention a également pour objet un servomoteur caractérisé en ce que les premières et deuxièmes surfaces annulaires sont contenus dans un premier et deuxième plans orthogonaux à l'axe.

La présente invention a également pour objet un servomoteur caractérisé en ce que le dispositif de réaction comporte un disque de réaction en appui par une première face contre un fond d'une cavité pratiquée dans une deuxième extrémité longitudinale de la douille en direction de la tige de poussée et par une deuxième face contre une extrémité arrière de la tige de poussée, en ce que le fond de la cavité comporte un passage pour le distributeur-plongeur afin de lui permettre d'entrer en contact avec la première face du disque de réaction et en ce que l'extrémité arrière de la tige de poussée comporte une face d'appui de diamètre sensiblement égal à celui du disque de réaction.

La présente invention a également pour objet un servomoteur caractérisé en ce qu'il comporte une première clé montée dans une lumière transversale pratiquée dans le corps du piston pneumatique et formant une butée de recul du piston pneumatique en venant en butée contre l'enveloppe du servomoteur.

La présente invention a également pour objet un servomoteur caractérisé en ce qu'il comporte une deuxième clé formant butée de recul pour le distributeur plongeur et monté dans la lumière transversale pratiqué dans le piston pneumatique et une lumière transversale pratiqué dans la douille.

La présente invention a également pour objet un dispositif de freinage comportant un servomoteur selon la présente invention et un maître-cylindre comportant un corps muni d'un alésage axial, dans lequel est monté à coulissement étanche au moins un piston hydraulique délimitant une chambre d'alimentation et une chambre de travail, la chambre d'alimentation étant raccordée à un réservoir de liquide de frein et la chambre de travail étant raccordée à des freins disposés au niveau des roues, au moins un clapet mettant en communication la chambre d'alimentation et la chambre de travail au repos et obturant ladite communication lorsque le piston est déplacé dans le sens d'actionnement du maître-cylindre caractérisé en ce que le piston pneumatique comporte une première partie et une deuxième partie, ladite première et deuxième parties étant aptes à coulisser l'une par rapport à l'autre de manière étanche, la deuxième partie formant un partie du clapet et en ce que la première partie est destinée à être déplacée par la douille par l'intermédiaire de la tige de poussé et en ce que la deuxième partie est destinée à être déplacée par le piston pneumatique.

La présente invention a également pour objet un dispositif caractérisé en ce que la deuxième partie est en appui contre une extrémité avant du piston pneumatique et en ce que la première partie est en appui contre une deuxième extrémité de la tige de poussée.

La présente invention a également pour objet un dispositif caractérisé en ce que la course déterminée est au moins égale à une distance à parcourir par la deuxième partie du piston du maître-cylindre pour obturer la communication entre la chambre d'alimentation et la chambre de pression.

La présente invention a également pour objet un dispositif caractérisé en ce qu'il comporte un moyen de rappel élastique de la douille en position repos monté en appui entre une saillie annulaire portée part le deuxième élément et la douille par l'intermédiaire d'une bague solidaire de la douille.

La présente invention sera mieux comprise à l'aide de la description qui va suivre et des dessins présentés en annexe et pour lesquels l'avant et l'arrière sont respectivement la gauche et la droite des dessins et sur lesquels :
- La figure 1 est une vue en coupe longitudinale au repos d'un ensemble servomoteur et maître-cylindre selon la présente invention ;
- La figure 2 est une vue en coupe longitudinale de l'ensemble servomoteur et maître-cylindre de la figure 1 à I la fin d'une première phase de fonctionnement ;
- La figure 3 est une vue en coupe longitudinale de l'ensemble servomoteur et maître-cylindre de la figure 1 dans une deuxième phase de freinage ;
- La figure 4 est une vue en perspective en coupe partielle d'un servomoteur selon la présente invention;
- La figure 5 est une vue en perspective en coupe partielle d'un autre exemple de servomoteur selon la présente invention.

Les mêmes références seront utilisées pour décrire les éléments ayant les mêmes fonctions.

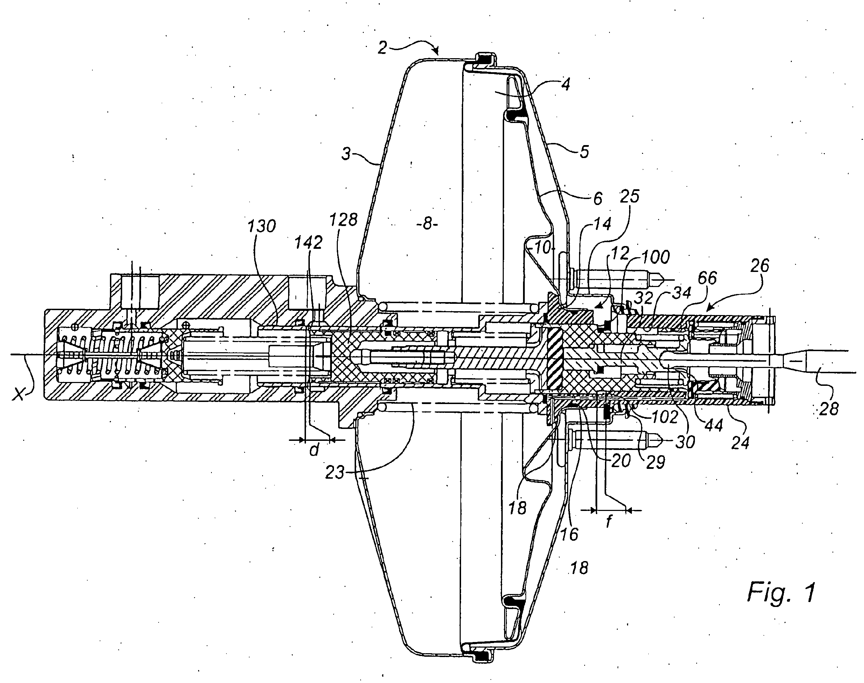

Sur les figures 1 à 4, on peut voir un servomoteur selon la présente invention en position repos comportant une enveloppe 2 d'axe longitudinal X formé par un cylindre 3 et un couvercle 5, délimitant un espace intérieur 4, une jupe 6 montée à coulissement axial étanche dans l'espace 4 et divisant l'espace 4 en une première chambre 8 à basse pression ou chambre avant et une deuxième chambre 10 à pression variable ou chambre arrière, un piston 12 monté solidaire de manière étanche dans la jupe 6 dans un orifice central 14 de la jupe 6. Mais il est bien entendu que l'on peut prévoir un ensemble jupe et piston pneumatique réalisé en une seule pièce.

La chambre avant est alimentée en fluide pneumatique à basse pression. La chambre arrière est susceptible d'être mise en communication avec la chambre à basse pression ou avec une source de fluide pneumatique à haute pression, par exemple de l'air à pression atmosphérique au moyen d'une valve trois voies 26.

Un élément élastique 23 de rappel du piston en position repos est disposé en réaction dans la chambre à basse pression 8, entre le piston pneumatique 12 et une face intérieure du cylindre 3.

L'orifice central 14 de la jupe 6 est bordé par une collerette 16 sensiblement cylindrique orientée vers l'arrière dans lequel est reçue une première extrémité avant 18 du piston pneumatique 12 de forme complémentaire. Un moyen d'étanchéité 20 est disposé entre une surface intérieure de la collerette tronconique et un surface extérieure de la première extrémité avant 18 du piston 18, par exemple il s'agit d'un joint torique monté dans une gorge pratiquée dans la surface extérieure du piston 12.

Le piston pneumatique s'étend vers l'arrière par une queue de piston 24 de forme sensiblement cylindrique, monté à coulissement étanche dans une cheminée 25 venue de matière avec le couvercle 5 au moyen d'un joint raclant 29. Le piston pneumatique 12 est traversé axialement par un alésage 34 dans lequel est montée dans une première partie arrière la valve trois voies 26 actionnée par une tige de commande 28.
La tige de commande est liée par une première extrémité à une pédale de frein (non représentée) et par une deuxième extrémité 30 à un distributeur plongeur 32.

La deuxième extrémité 30 de la tige de commande 28 est montée de manière rotulante dans une première extrémité 44 arrière du distributeur plongeur.

La valve trois voies 26 comporte un obturateur 46 apte à coopérer avec un premier siège de clapet d'équilibrage 48 et un deuxième siège de clapet d'admission 50. Le premier siège de clapet 48 est porté par une première extrémité longitudinale arrière 70 d'une douille 54 montée à coulissement étanche dans l'alésage 34 du piston pneumatique 12. Le deuxième siège de clapet 50 est formé par un épanouissement tronconique 78 porté par le première extrémité arrière 44 du distributeur-plongeur entourant la deuxième extrémité avant de la tige de commande 28.

La première extrémité avant du piston pneumatique 12 comporte une face annulaire 74 sensiblement perpendiculaire à l'axe du servomoteur et apte à venir en appui contre une extrémité arrière d'un piston d'un maître-cylindre. Une deuxième extrémité avant 72 de la douille 54 fait saillie de la surface avant du piston pneumatique par l'alésage 34:

Le servomoteur comporte également un dispositif de réaction DR. Dans l'exemple représenté, le dispositif DR comporte un disque de réaction 73 disposé dans un logement 76 formé par la deuxième extrémité avant 72 de la douille et un fond 84 sensiblement perpendiculaire à l'axe X, solidaire d'une première extrémité longitudinale d'une tige de poussée 90.

Le logement 76 est de forme sensiblement cylindrique d'axe X et comporte une paroi radialement externe 82. Un passage 86 débouche dans le fond 84 du logement 76 pour permettre à une extrémité longitudinale avant 88 appelé palpeur de venir en contact d'une face arrière du disque de réaction en phase de freinage.
Au repos un jeu prédéterminé est prévu entre le palpeur et la face arrière du disque de réaction, appelé saut.

Le disque de réaction est réalisé en matériau sensiblement incompressible, par exemple en élastomère ou plastomère, en leur mélange ou leur alliage. Le fonctionnement du dispositif de réaction comportant un disque de réaction étant bien connu de l'homme du métier nous ne le décrirons pas d'avantage.

Il est bien entendu que l'on peut prévoir un dispositif de réaction de type hydraulique dans lequel le disque de réaction est remplacé par un piston de réaction destiné par une première extrémité longitudinale à venir en contact du palpeur du distributeur-plongeur et soumis par une deuxième extrémité longitudinale à la pression hydraulique régnant dan le maître-cylindre.

La tige de poussée 90 comporte une deuxième extrémité avant 91 destinée à venir en appui contre une extrémité arrière du piston primaire du maître-cylindre.
La tige de poussée 90 est maintenue en appui sur le disque de réaction par les ressorts du maître-cylindre.

Dans l'exemple représenté, l'étanchéité du coulissement entre la douille 54 et la le piston 12 est obtenue par un joint torique 66 monté dans une gorge pratiquée dans la paroi extérieure de la douille 54. Il est bien entendu que l'on pourrait prévoir par exemple une gorge dans la paroi intérieur de l'alésage 34 du piston 12 pour recevoir le moyen d'étanchéité.

Un moyen élastique 94 de rappel du distributeur-plongeur en position repos, par exemple un ressort hélicoïdal est monté en réaction entre un épaulement annulaire 96 pratiquée sur la surface extérieure de la douille 54 et orienté vers l'arrière et l'épanouissement tronconique 78.

La douille comporte un épaulement 100 pratiqué sur la périphérie radialement extérieure de la douille, orienté vers l'arrière formant une première face d'appui contenue dans un plan sensiblement perpendiculaire à l'axe X et le piston pneumatique comporte une portée annulaire 102 formant une deuxième face d'appui pratiquée sur la surface intérieure de l'alésage 34 en vis-à-vis de l'épaulement 100 et contenu dans un plan perpendiculaire à l'axe X. La première et la deuxième face d'appui sont séparées par un jeu j. Le jeu j autorise un déplacement vers l'avant du piston pneumatique indépendamment de la douille sur une course j. Ainsi, lorsque le piston a parcouru le jeu j, la piston vient en contact de la douille et le déplace dans le sens d'actionnement. Le servomoteur fonctionne alors comme un servomoteur de type classique.

Il est bien entendu que l'on peut prévoir des faces d'appui contenues dans des plans inclinés par rapport à l'axe X.

Dans l'exemple représenté, l'épaulement et la portée annulaire sont de forme annulaire. Cependant on pourrait prévoir des secteurs répartis angulairement autour de l'axe X et portés par le piston pneumatique et par la douille et disposés en regard deux à deux.

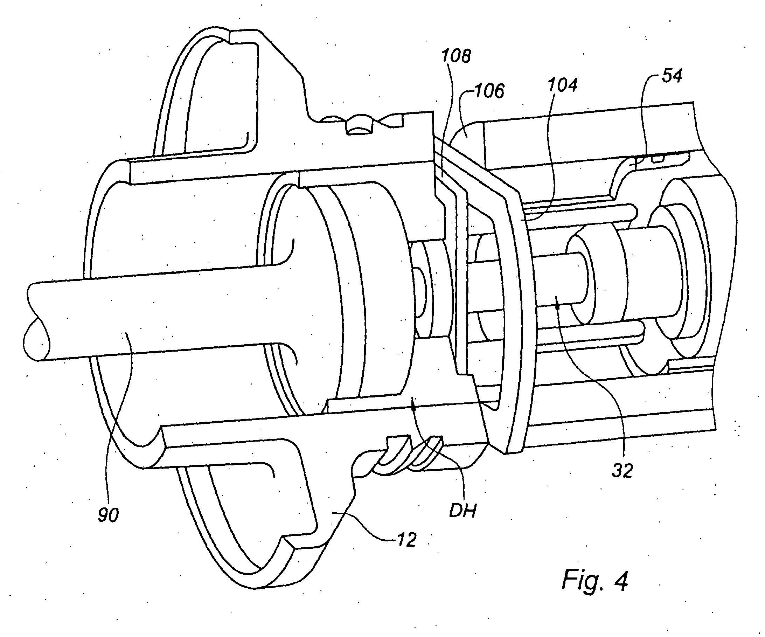

Le servomoteur comporte également (figure 4) une première clé 104 disposée dans une fente transversale 106 pratiquée dans le piston sensiblement perpendiculairement à l'axe X. La clé 104 en position repos est en appui par une première extrémité transversale 106 contre une partie arrière de l'enveloppe définissant une position repos pour le piston pneumatique. Dans l'exemple représenté, la première clé 104 a sensiblement une forme de fourche montée perpendiculairement à l'axe X.

Le servomoteur comporte également un élément de retenue 108 en position arrière du distributeur plongeur définissant la position repos du distributeur plongeur. Cet élément est formé par une deuxième clé disposée dans la fente transversale 106 et traversant également la douille 54 par une fente transversale (non visible) de manière à être placée en arrière du palpeur afin de former une butée de recul et en avant de la première clé 104 de manière à ce que la deuxième clé 108 soit en appui contre l'enveloppe du servomoteur par l'intermédiaire de la première clé 104.
Dans l'exemple représenté, la clé 108 a également la forme d'une fourche, mais il est bien entendu que les première et deuxième clés 104,108 peuvent avoir toute autre forme.

Le servomoteur selon la présente invention est associé à un maître-cylindre formant un dispositif de freinage, le maître-cylindre comportant un corps 112 de maître-cylindre percé d'un alésage borgne 114. Un piston primaire 116 et un piston secondaire 118 sont montés à coulissement étanche dans l'alésage 114, définissant respectivement une chambre d'alimentation 120,122 et une chambre de pression 124, 126.
Chaque chambre d'alimentation 120,122 est raccordée à un réservoir de liquide de frein et chaque chambre de pression 124, 126 est reliée à deux freins d'un véhicule automobile (non représentés).

Le piston secondaire est de type classique et bien connu de l'homme du métier, par conséquent il ne sera pas décrit en détail.

Le piston primaire selon la présente invention est composite et comporte un premier élément intérieur et un deuxième élément extérieurs concentriques 128,130 aptes à être déplacés séparément.

Le premier élément 128 est de forme cylindrique à section circulaire et apte à coulisser de manière étanche dans une partie avant 132 du deuxième élément 130 en forme de douille. Le deuxième élément est apte à coulisser de manière étanche dans l'alésage 114 du maître-cylindre.

Le deuxième élément 130 comporte une partie arrière 134 destinée à être en appui contre une face avant du piston pneumatique par l'intermédiaire d'une embase 136. Dans l'exemple représenté, le deuxième élément 130 du piston primaire est de forme étagée avec la partie arrière 134 de diamètre supérieure à la partie avant 132. L'appui de l'extrémité arrière 134 de l'élément extérieur est étanche de manière à isoler la chambre à basse pression de la chambre à pression variable. Dans l'exemple représenté, un joint plat 138 est monté dans une gorge 140 pratiqué dans l'extrémité arrière 134 de l'élément extérieur.

Un moyen élastique de rappel 127 de la douille en position repos est disposé entre une face arrière 129 d'une saillie annulaire 131 s'étendant radialement vers l'intérieur du deuxième élément 130 et une face avant 133 de la bague 75.

Le deuxième élément 130 périphérique formant le piston primaire du maître-cylindre comporte au moins un orifice 142 mettant en communication la chambre d'alimentation 120 avec la chambre de pression 124 lorsque le dispositif de freinage est au repos.
Le circuit primaire du maître-cylindre formé par la chambre d'alimentation 120, la chambre de pression 124 et le piston primaire 116 comporte également un clapet d'obturation de la communication entre la chambre d'alimentation 120 et la chambre de pression 124 comportant un joint à lèvres dans l'exemple représenté monté dans une gorge 148 pratiquée dans la surface intérieure de l'alésage borgne 114, et destiné à coopérer avec l'orifice 142 lorsque le deuxième élément 130 périphérique est déplacé vers la droite lors d'une phase de freinage.
Le maître-cylindre comporte également un moyen d'étanchéité 150 disposé à une extrémité arrière du maître-cylindre dans une gorge pratiquée dans le corps du maître-cylindre. Il s'agit dans l'exemple représenté d'un joint à lèvres 150, le maître-cylindre comporte également un premier joint 152, un deuxième joint 153, et un troisième joint 154 disposés dans des gorges annulaires pratiquées dans la périphérie extérieure du premier élément 128 et destinées à assurer l'étanchéité entre le premier élément 128 et le deuxième élément 130 en particulier dans certaines situations de défaillances qui seront décrites ultérieurement. Le deuxième élément extérieur 130 comporte également au moins un passage 156 pratiqué en arrière du passage 142 et destiné à faire communiquer la chambre d'alimentation et la chambre de pression 124 en cas de défaillance du moyen d'étanchéité 158 disposé à une extrémité avant du premier élément 128 par l'intermédiaire d'au moins un canal 160 pratiqué dans la périphérie extérieure du premier élément 128, la canal 160 est réalisé sous la forme d'une gorge axiale s'étendant entre le moyen d'étanchéité 158 et l'orifice 150.

De manière habituelle l'orifice 142 mettant en communication la chambre d'alimentation 120 avec la chambre de pression 124 est disposé en position repos en arrière du moyen d'étanchéité 147 de manière à ce que l'extrémité arrière du joint 147 soit la plus proche possible de l'extrémité avant de l'orifice 142, et de manière à ce que l'orifice 142 mette en communication la chambre d'alimentation 120 avec la chambre de pression 124. De plus, la dimension axiale de l'orifice 142 est choisie relativement faible de manière à ce que lorsque en phase de freinage le piston primaire est déplacé vers la gauche, l'orifice 142 soit recouvert rapidement par le joint 146, interrompant ainsi la communication entre la chambre 120 et la chambre 124 et permettant une montée en pression dans la chambre de pression 124 et un freinage au niveau des roues. Ceci permet alors d'avoir un freinage rapide et une course à la pédale dite course morte relativement faible.

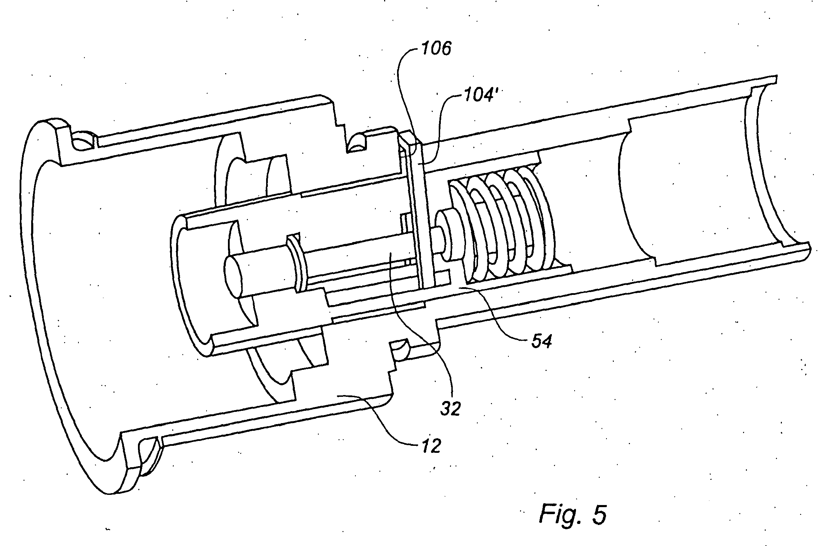

Sur la figure 5, on peut voir un servomoteur selon la présente invention comportant une seule clé 104' montée dans une fente 106' transversale pratiquée dans le piston pneumatique 12. Au repos, la douille 54 et le distributeur plongeur 32 sont en appui sur la clé 104'.

La présente invention permet avantageusement de prévoir une dimension axiale d de l'orifice 142 plus importante puisque le déplacement de i'élément extérieur 130 composant le piston primaire n'est pas ressenti par le conducteur. Ainsi, le deuxième élément 130 peut parcourir une course importante afin d'obturer complètement l'orifice 142 par le joint 146 afin d'avoir une isolation complète entre la chambre 120 et la chambre 124 sans que le conducteur ne ressente à la pédale une importante course morte et donc la sensation d'un manque de réactivité du circuit de freinage.

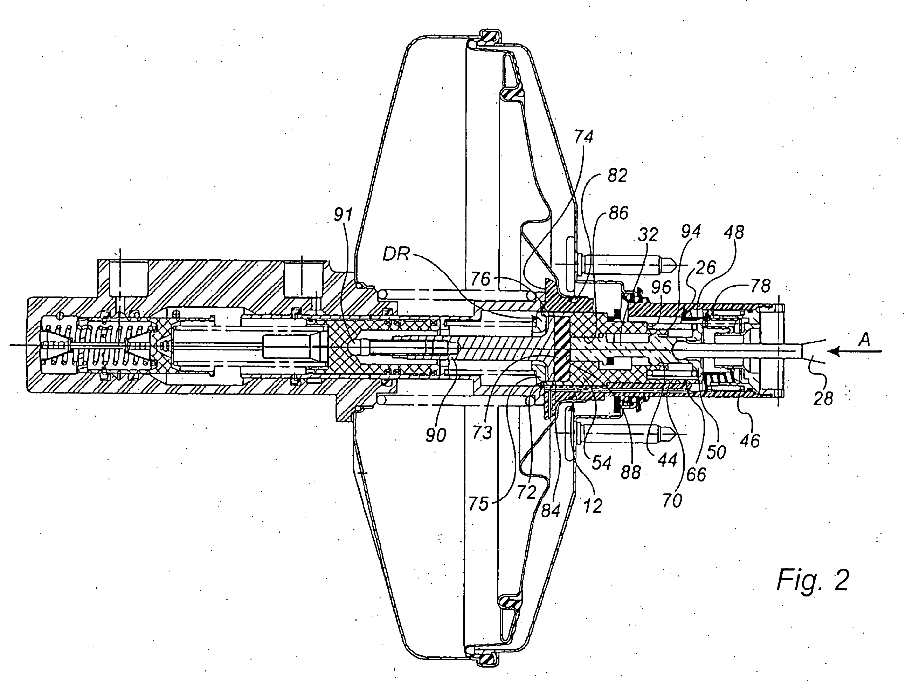

Nous allons maintenant expliquer le fonctionnement du dispositif de freinage selon la présente invention. Lorsque le conducteur appuie sur la pédale de frein (figure 2), il déplace la tige de commande 28 dans le sens de la flèche A, le clapet 46 vient en contact du clapet d'équilibrage 48 et s'éloigne du siège de clapet d'alimentation 50. Il y a alors apparition d'une différence de pressions entre la chambre avant du servomoteur et la chambre arrière du servomoteur, la jupe 6 ainsi que le piston pneumatique 12 sont alors entraînés dans le sens de la flèche A. Tandis que la douille 54 portant le siège d'équilibrage reste immobile relativement au couvercle du fait du jeu j existant entre la portée annulaire pratiquée sur le piston pneumatique et l'épaulement 100 porté par la douille 54.

Le déplacement du piston pneumatique provoque le coulissement du deuxième élément 130 du piston primaire et provoque le rapprochement de l'orifice 142 du joint 146. Le piston pneumatique se déplace indépendamment de la douille 54 sur la distance j, celle-ci est déterminée de manière à ce que la distance j soit au moins égale à la course d nécessaire du deuxième élément 130 pour que le joint 146 recouvre l'orifice 142 et que par conséquent, la chambre d'alimentation soit isolée de la chambre de pression 124. On peut alors prévoir une course d'obturation d de l'orifice 142 importante puisque celle-ci sera masquée par le déplacement du piston pneumatique indépendamment de la douille 54.

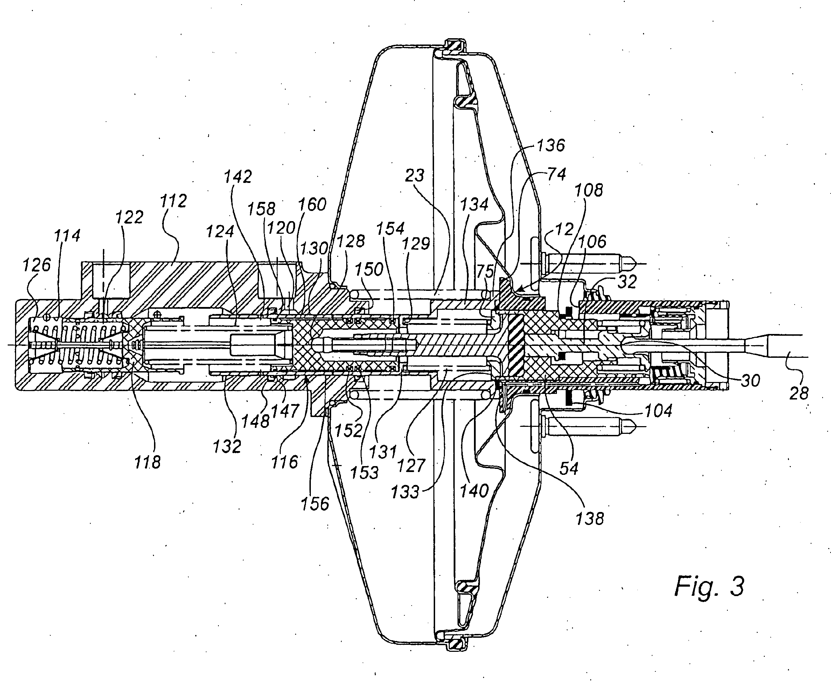

Au delà de la course j (figure 3), le piston pneumatique vient en appui contre la douille 54, le piston pneumatique et la douille 54 forment alors un élément monobloc et le servomoteur fonctionne alors comme un dispositif de freinage classique.

La taille importante de l'orifice ou des orifices 142 permettant la communication entre la chambre d'alimentation 120 et la chambre de pression 124 permet alors en cas de fonctionnement du type ESP un débit important à travers le maître-cylindre pour réaliser un freinage rapide.

La présente invention présente l'avantage d'augmenter la sûreté du dispositif de freinage en cas de défaillance de l'alimentation en fluide à basse pression de la chambre avant du servomoteur. En effet dans ce cas de défaillance, aucune assistance n'est fourni au conducteur. Il doit donc dans le cas d'un servomoteur classique, déplacer la jupe et le piston pneumatique à l'encontre d'un ressort de rappel du piston pneumatique et des ressorts du maître-cylindre pour pouvoir déplacer les pistons hydrauliques du maître-cylindre. Grâce à la présente invention, le conducteur déplace uniquement la douille 54 dont le déplacement est uniquement gêner par le ressort de rappel de la douille et ceux du maître-cylindre, qui est de charge beaucoup plus faible. Ainsi un conducteur ayant une force musculaire relativement faible peut actionner le dispositif de freinage beaucoup plus facilement

La présente invention s'applique en particulier au système de freinage pour voitures particulières.

## Revendications

1. Servomoteur d'assistance pneumatique au freinage comportant une enveloppe (2) d'axe longitudinale (X), dans laquelle est monté à coulissement étanche un ensemble jupe (6) et piston pneumatique (12) d'axe longitudinal (X), ledit ensemble (6,12) divisant l'espace intérieur (4) de l'enveloppe (2) en une chambre à basse pression (8) et en une chambre à pression variable (10), une valve trois voies (26) actionnée par une tige de commande (28) étant montée dans un passage longitudinal (34) percé dans le piston pneumatique (12), ladite tige de commande (28) étant reliée par une première extrémité longitudinale à une pédale de frein et une deuxième extrémité de ladite tige de commande (28) étant reçue dans une cavité de réception pratiquée dans une première extrémité longitudinale d'un distributeur-plongeur (32), un palpeur d'application de l'effort de la tige de commande (28) à un piston hydraulique (116) d'un maître-cylindre par l'intermédiaire d'un dispositif de réaction (DH), ledit ensemble jupe et piston (6,12) transmettant un effort d'assistance pneumatique au piston hydraulique (116) du maître-cylindre par une face centrale (74) du piston pneumatique, ladite valve trois voies (26) comportant un premier (48) et un deuxième (50) sièges de clapet, et un obturateur (46) amené en application d'au moins un dès premier et deuxième sièges de clapet (48,50) par un ressort de valve, ledit deuxième siège de clapet (50) étant porté par une première extrémité (44) longitudinale du distributeur-plongeur (32), le premier siège de clapet étant porté par une première extrémité longitudinale d'une douille (54) montée à coulissement étanche dans le piston pneumatique (12) sur une première course déterminée (j), un moyen de solidarisation apte à lier axialement la douille (54) au piston pneumatique (12) lorsque ledit piston pneumatique a parcouru la course déterminée (j), **caractérisé en ce que** ledit moyen comporte un premier appui porté par une surface intérieure de l'alésage (34) du piston pneumatique et un deuxième appui porté par une surface extérieure de la douille et destiné à venir en contact lorsque ladite course déterminée (j) a été parcourue, le premier appui étant disposé en arrière du deuxième appui selon l'axe (X) dans le sens d'actionnement du servomoteur.

2. Servomoteur selon la revendication 1 **caractérisé en ce que** le premier et le deuxième appui sont formés par des première et deuxième surfaces annulaires.

3. Servomoteur selon la revendication 1 ou 2 **caractérisé en ce que** les premières et deuxièmes surfaces annulaires sont contenus dans un premier et deuxième plans orthogonaux à l'axe X.

4. Servomoteur selon les revendication 1 à 3 **caractérisé en ce que** le dispositif de réaction (DH) comporte un disque de réaction en appui par une première face contre un fond d'une cavité pratiquée dans une deuxième extrémité longitudinale de la douille (54) en direction de la tige de poussée et par une deuxième face contre une extrémité arrière de la tige de poussée, **en ce que** le fond de la cavité comporte un passage pour le distributeur-plongeur afin de lui permettre d'entrer en contact avec la première face du disque de réaction et **en ce que** l'extrémité arrière de la tige de poussée comporte une face d'appui de diamètre sensiblement égal à celui du disque de réaction.

5. Servomoteur selon l'une des revendications précédentes **caractérisé en ce qu'**il comporte une première clé montée dans une lumière transversale (106) pratiquée dans le corps du piston pneumatique et formant une butée de recul du piston pneumatique (12) en venant en butée contre l'enveloppe du servomoteur.

6. Servomoteur selon la revendication précédente **caractérisé en ce qu'**il comporte une deuxième clé (108) formant butée de recul pour le distributeur plongeur et monté dans la lumière transversale (106) pratiqué dans le piston pneumatique et une lumière transversale (106) pratiqué dans la douille (54).

7. Dispositif de freinage comportant un servomoteur selon l'une des revendications 1 à 7 et un maître-cylindre comportant un corps (112) muni d'un alésage axial (14), dans lequel est monté à coulissement étanche au moins un piston hydraulique délimitant une chambre d'alimentation et une chambre de travail, la chambre d'alimentation étant raccordée à un réservoir de liquide de frein et la chambre de travail étant raccordée à des freins disposés au niveau des roues, au moins un clapet mettant en communication la chambre d'alimentation et la chambre de travail au repos et obturant ladite communication lorsque le piston est déplacé dans le sens d'actionnement du maître-cylindre **caractérisé en ce que** le piston hydraulique (116) comporte une première partie et une deuxième partie (130), ladite première et deuxième parties étant aptes à coulisser l'une par rapport à l'autre de manière étanche, la deuxième partie formant une partie du clapet et **en ce que** la première partie est destinée à être déplacée par la douille par l'intermédiaire de la tige de poussée (90) et **en ce que** la deuxième partie (130) est destinée à être déplacée par le piston pneumatique (12).

8. Dispositif selon la revendication précédente **caractérisé en ce que** la deuxième partie (130) est en appui contre une extrémité avant du piston pneumatique (12) et **en ce que** la première partie (128) est en appui contre une deuxième extrémité de la tige de poussée (90).

9. Dispositif selon la revendication précédente **caractérisé en ce que** la course déterminée (j) est au moins égale à une distance (d) à parcourir par la deuxième partie du piston du maître-cylindre pour obturer la communication entre la chambre d'alimentation et la chambre de pression.

10. Dispositif selon la revendication précédente **caractérisé en ce qu'**il comporte un moyen de rappel élastique (127) de la douille (54) en position repos monté en appui entre une saillie annulaire portée par la deuxième partie (130) et la douille par l'intermédiaire d'une bague (75) solidaire de la douille.

## Claims

1. Pneumatic brake booster comprising a casing (2) of longitudinal axis (X), in which an assembly consisting of a skirt (6) and a pneumatic piston (12) of longitudinal axis (X) is mounted such that it can slide in a leaktight fashion, the said assembly (6, 12) dividing the interior space (4) of the casing (2) into a low-pressure chamber (8) and into a variable-pressure chamber (10), a three-way valve (26) actuated by a control rod (28) being mounted in a longitudinal passage (34) pierced in the pneumatic piston (12), the said control rod (28) being connected by a first longitudinal end to a brake pedal and a second end of the said control rod (28) being housed in an accommodating cavity made in a first longitudinal end of a distributor plunger (32), a sensor for applying the force from the control rod (28) to a hydraulic piston (116) of a master cylinder via a reaction device (DH), the said piston and skirt assembly (6, 12) transmitting a pneumatic boost force to the hydraulic piston (116) of the master cylinder via a central face (74) of the pneumatic piston, the said three-way valve (26) comprising a first (48) and a second (50) valve seat, and a shut-off member (46) brought to press against at least one of the first and second valve seats (48, 50) by a valve spring, the said second valve seat (50) being borne by a first longitudinal end (44) of the distributor plunger (32), the first valve seat being borne by a first longitudinal end of a sleeve (54) mounted such that it can slide in a leaktight manner in the pneumatic piston (12) over a first determined travel (j), a securing means capable of axially connecting the sleeve (54) to the pneumatic piston (12) when the said pneumatic piston has covered the determined travel (j), **characterized in that** the said means comprises a first rest borne by an interior surface of the bore (34) of the pneumatic piston and a second rest borne by an exterior surface of the sleeve and intended to come into contact when the said determined travel (j) has been covered, the first rest being positioned to the rear of the second rest along the axis (X) in the direction of actuation of the booster.

2. Booster according to Claim 1, **characterized in that** the first and second rests are formed by first and second annular surfaces.

3. Booster according to Claim 1 or 2, **characterized in that** the first and second annular surfaces are contained in a first and a second plane which are orthogonal to the axis X.

4. Booster according to Claims 1 to 3, **characterized in that** the reaction device (DH) comprises a reaction disc resting via a first face against an end of a cavity made in a second longitudinal end of the sleeve (54) in the direction of the push rod and via a second face against a rear end of the push rod, **in that** the end of the cavity comprises a passage for the distributor plunger, so as to allow it to come into contact with the first face of the reaction disc, and **in that** the rear end of the push rod comprises a bearing face of diameter substantially equal to that of the reaction disc.

5. Booster according to one of the preceding claims, **characterized in that** it comprises a first key mounted in a transverse keyway (106) formed in the body of the pneumatic piston and forming a limit stop for the retreat movement of the pneumatic piston (12) coming into abutment against the casing of the booster.

6. Booster according to the preceding claim, **characterized in that** it comprises a second key (108) forming a limit stop for the retreat movement of the distributor plunger and mounted in the transverse keyway (106) created in the pneumatic piston and a transverse keyway (106) created in the sleeve (54).

7. Braking device comprising a booster according to one of Claims 1 to 7 and a master cylinder comprising a body (112) equipped with an axial bore (14) in which there is mounted such that it can slide in a leaktight manner at least one hydraulic piston delimiting a supply chamber and a working chamber, the supply chamber being connected to a reservoir of brake fluid and the working chamber being connected to brakes arranged at the wheels, at least one valve shutter placing the supply chamber and the working chamber in communication at rest and shutting off the said communication when the piston is moved in the direction of actuation of the master cylinder, **characterized in that** the hydraulic piston (116) comprises a first part and a second part (130), the said first and second parts being able to slide one relative to the other in a leaktight fashion, the second part forming part of the valve shutter and **in that** the first part is intended to be moved by the sleeve via the push rod (90) and **in that** the second part (130) is intended to be moved by the pneumatic piston (12).

8. Device according to the preceding claim, **characterized in that** the second part (130) rests against a front end of the pneumatic piston (12) and **in that** the first part (128) rests against a second end of the push rod (90).

9. Device according to the preceding claim, **characterized in that** the determined travel (j) is at least equal to a distance (d) to be covered by the second part of the piston of the master cylinder in order to shut off the communication between the supply chamber and the pressure chamber.

10. Device according to the preceding claim, **characterized in that** it comprises an elastic return means (127) for returning the sleeve (54) to the rest position and which is mounted resting between an annular projection borne by the second part (130) and the sleeve via a ring (75) secured to the sleeve.

## Patentansprüche

1. Pneumatischer Servomotor zur Bremsunterstützung, der ein Gehäuse (2) mit einer Längsachse (X) aufweist, in dem eine aus einer Schürze (6) und einem pneumatischen Kolben (12) mit der Längsachse (X) bestehende Baugruppe in dichter Weise gleitend angebracht ist, wobei die Baugruppe (6, 12) den Innenraum (4) des Gehäuses (2) in eine Niederdruckkammer (8) und eine Kammer (10) mit variablem Druck unterteilt, ein Dreiwegeventil (26), das von einer Steuerstange (28) betätigt wird, die in einem im pneumatischen Kolben (12) ausgebildeten Längsdurchgang (34) angebracht ist, wobei die Steuerstange (28) über ein erstes Längsende mit einem Bremspedal verbunden ist und ein zweites Ende der Steuerstange (28) in einem Aufnahmehohlraum aufgenommen ist, der in einem ersten Längsende eines Verteilertauchkolbens (32) ausgebildet ist, einen Taster zum Aufbringen der Kraft der Steuerstange (28) auf einen hydraulischen Kolben (116) eines Hauptzylinders mittels einer Reaktionseinrichtung (DH), wobei die aus Schürze und Kolben bestehende Baugruppe (6, 12) eine pneumatische Unterstützungskraft über eine Mittelfläche (74) des pneumatischen Kolbens zum hydraulischen Kolben (116) des Hauptzylinders leitet, wobei das Dreiwegeventil (26) einen ersten Ventilelementsitz (48) und einen zweiten Ventilelementsitz (50) aufweist, und einen Verschluss (46), der über eine Rückstellfeder in Anlage an den ersten und/oder zweiten Ventilelementsitz (48, 50) gebracht wird, wobei der zweite Ventilelementsitz (50) von einem ersten Längsende (44) des Verteilertauchkolbens (32) getragen ist und der erste Ventilelementsitz von einem ersten Längsende einer Hülse (54) getragen ist, die so im pneumatischen Kolben (12) angebracht ist, dass sie in dichter Weise über einen ersten vorbestimmten Weg (j) gleitet, und ein Mittel zur festen Verbindung, das die Hülse (54) axial mit dem pneumatischen Kolben (12) verbinden kann, wenn der pneumatische Kolben den vorbestimmten Weg (j) zurückgelegt hat, **dadurch gekennzeichnet, dass** das Mittel eine erste Stütze, die von einer Innenfläche der Bohrung (34) des pneumatischen Kolbens getragen ist, und eine zweite Stütze aufweist, die von einer Außenfläche der Hülse getragen ist und in Kontakt gelangen soll, wenn der vorbestimmte Weg (j) zurückgelegt wurde, wobei die erste Stütze entlang der Achse (X) in Betätigungsrichtung des Servomotors hinter der zweiten Stütze liegt.

2. Servomotor nach Anspruch 1, **dadurch gekennzeichnet, dass** die erste und die zweite Stütze durch eine erste und eine zweite ringförmige Fläche gebildet sind.

3. Servomotor nach Anspruch 1 oder 2, **dadurch gekennzeichnet, dass** die erste und zweite ringförmige Fläche in einer ersten und einer zweiten Ebene enthalten sind, die orthogonal zur Achse X verlaufen.

4. Servomotor nach den Ansprüchen 1 bis 3, **dadurch gekennzeichnet, dass** die Reaktionseinrichtung (DH) eine Reaktionsscheibe aufweist, die über eine erste Fläche in Richtung Schubstange an einem Boden eines in einem zweiten Längsende der Hülse (54) ausgebildeten Hohlraum und über eine zweite Fläche an einem hinteren Ende der Schubstange anliegt, der Boden des Hohlraums einen Durchgang für den Verteilertauchkolben aufweist, damit dieser mit der ersten Fläche der Reaktionsscheibe in Kontakt gelangen kann, und das hintere Ende der Schubstange eine Anlagefläche mit einem Durchmesser aufweist, der im Wesentlichen dem Durchmesser der Reaktionsscheibe entspricht.

5. Servomotor nach einem der vorhergehenden Ansprüche, **dadurch gekennzeichnet, dass** er einen ersten Schlüssel aufweist, der in einer im Körper des pneumatischen Kolbens ausgebildeten Queröffnung (106) angebracht ist und einen Rückstoßanschlag des pneumatischen Kolbens (12) bildet, indem er in Anschlag gegen das Gehäuse des Servomotors gelangt.

6. Servomotor nach dem vorhergehenden Anspruch, **dadurch gekennzeichnet, dass** er einen zweiten Schlüssel (108) aufweist, der einen Rückstoßanschlag für den Verteilertauchkolben bildet und in der im pneumatischen Kolben ausgebildeten Queröffnung (106) und einer in der Hülse (54) ausgebildeten Queröffnung (106) angebracht ist.

7. Bremsvorrichtung mit einem Servomotor nach einem der Ansprüche 1 bis 7 und einem Hauptzylinder mit einem Körper (112), der mit einer axialen Bohrung (14) versehen ist, in die mindestens ein hydraulischer Kolben in dichter Weise gleitend angebracht ist, der eine Versorgungskammer und eine Arbeitskammer begrenzt, wobei die Versorgungskammer mit einem Bremsflüssigkeitsbehälter verbunden ist und die Arbeitskammer mit auf Höhe der Räder angeordneten Bremsen verbunden ist, wobei mindestens ein Ventilelement die Versorgungskammer und die Arbeitskammer im Ruhezustand verbindet und die Verbindung schließt, wenn der Kolben in Betätigungsrichtung des Hauptzylinders bewegt wird, **dadurch gekennzeichnet, dass** der hydraulische Kolben (116) einen ersten Abschnitt und einen zweiten Abschnitt (130) aufweist, wobei der erste und der zweite Abschnitt in dichter Weise zueinander gleiten können, wobei der zweite Abschnitt einen Teil des Ventilelements bildet, und der erste Abschnitt über die Schubstange (90) von der Hülse bewegt werden soll und der zweite Abschnitt (130) von dem pneumatischen Kolben (12) bewegt werden soll.

8. Vorrichtung nach dem vorhergehenden Anspruch, **dadurch gekennzeichnet, dass** der zweite Abschnitt (130) an einem vorderen Ende des pneumatischen Kolbens (12) anliegt und der erste Abschnitt (128) an einem zweiten Ende der Schubstange (90) anliegt.

9. Vorrichtung nach dem vorhergehenden Anspruch, **dadurch gekennzeichnet, dass** der vorbestimmte Weg (j) zumindest einer Strecke (d) entspricht, die der zweite Abschnitt des Kolbens des Hauptzylinders zurücklegen muss, um die Verbindung zwischen der Versorgungskammer und der Druckkammer zu schließen.

10. Vorrichtung nach dem vorhergehenden Anspruch, **dadurch gekennzeichnet, dass** sie ein elastisches Mittel (127) zum Zurückstellen der Hülse (54) in die Ruhestellung aufweist, das über einen mit der Hülse fest verbundenen Ring (75) in Anlage zwischen einem von dem zweiten Abschnitt (130) getragenen ringförmigen Vorsprung und der Hülse angebracht ist.
